(19) **Europäisches Patentamt / European Patent Office / Office européen des brevets**

(11) **EP 3 316 211 A1**

(12) **EUROPEAN PATENT APPLICATION**

(43) Date of publication:
**02.05.2018 Bulletin 2018/18**

(51) Int Cl.:
***G06T 5/00*** (2006.01)

(21) Application number: **16306410.8**

(22) Date of filing: **27.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **REINHARD, Erik
35576 Cesson-Sévigné (FR)**
• **TURKAN, Mehmet
35576 Cesson-Sévigné (FR)**

(74) Representative: **Huchet, Anne
TECHNICOLOR
1-5, rue Jeanne d'Arc
92130 Issy-les-Moulineaux (FR)**

(54) **METHOD FOR ENHANCING BRIGHTNESS OF A MULTIMEDIA CONTENT, CORRESPONDING COMPUTER PROGRAM PRODUCT AND DEVICE**

(57)    A method is proposed for enhancing brightness of a multimedia content. Such method comprises, for a current image of the multimedia content:
• obtaining (200) at least one highlight area representative of at least one area of the current image comprising at least one highlight pixel;
• determining (210) at least one glare area from at least the at least one highlight area; and
• enhancing (220) brightness of the current image by incorporating the at least one glare area into the current image to provide an output image.

**Figure 2a**

EP 3 316 211 A1

Printed by Jouve, 75001 PARIS (FR)

**Description**

## 1. FIELD OF THE DISCLOSURE

The field of the disclosure is that of image and video processing.

More specifically, the disclosure relates to a method for increasing the perceived brightness of an image, without increasing the dynamic range or bit-depth of the image.

The disclosure can be of interest in any field where the perceived quality of an image or a video is limited by the intrinsic performances of the display on which it is rendered. This can be the case for instance when looking at such image or video on a conventional display (i.e. not of the High Dynamic Range, or HDR, kind).

## 2. TECHNOLOGICAL BACKGROUND

The brightness of an image is a perceived quantity that describes how light or dark an image appears. One definition given by Wyszecki and Stiles in 2000 is: "Brightness is the attribute of visual sensation according to which a visual stimulus appears to emit more or less light. It ranges from dim to bright." (see "Wyszecki, G. and Stiles, W.S. (2000). "Color Science", New York (et al.), London and Sydney: John Wiley')

In this context, HDR imaging constitutes a set of technologies which aim to capture, process, archive, transmit, and display images with a larger range of luminance values, which, if displayed appropriately, will give the sensation of higher contrast and higher brightness. With this comes an associated improved visual experience.

However, for reasons of practicality as well as cost, it is not always straightforward to engineer HDR solutions. For instance, the technology required to produce an HDR display in a format suitable for mobile applications, does not currently exist. The peak luminance of such displays remains relatively low.

Furthermore, the bit-depth at which the displays are driven is often still eight bits, as is most of the available content.

Consequently, there is a need for a method that processes images such that the resulting appearance is one of increased brightness, even though the bit-depth of the image is not increased and the peak luminance of the display remains unaltered.

There is also a need for this method to be stable in order to avoid introducing any flicker or artifacts when applied to video content.

## 3. SUMMARY

A particular aspect of the present disclosure relates to a method for enhancing brightness of a multimedia content. Such method comprises, for a current image of the multimedia content:

- obtaining at least one highlight area representative of at least one area of the current image comprising at least one highlight pixel;
- determining at least one glare area from at least the at least one highlight area; and
- enhancing brightness of the current image by incorporating the at least one glare area into the current image to provide an output image.

Thus, the present disclosure proposes a new and inventive solution for enhancing brightness of a multimedia content that includes image or video materials, without increasing the dynamic range or bit-depth of the image.

For this, it is proposed to add glare, normally experienced as a perception effect when looking at an area with a high luminance value, directly in the considered current image. It thus results that a person looking at the current image after application of the disclosed method discerns a brighter image than the original current image, despite the possible reduced range of luminance in this image.

Furthermore, this addition of glare is done selectively in areas where glare has to be seen by the person looking at the image (i.e. the lighter areas). Thus, areas not affected by glare do not loose contrast, yielding in having the overall contrast of the current image not degraded.

Another aspect of the present disclosure relates to an apparatus for enhancing brightness of a multimedia content. Such apparatus comprises a memory and a processor configured for, for a current image of the multimedia content:

- obtaining at least one highlight area representative of at least one area of the current image comprising at least one highlight pixel;
- determining at least one glare area from at least the at least one highlight area; and

- enhancing brightness of the current image by incorporating the at least one glare area into the current image to provide an output image.

Such an apparatus is particularly adapted for implementing the method for enhancing brightness of a multimedia content according to the present disclosure. Thus, the characteristics and advantages of this apparatus are the same as the disclosed method for enhancing brightness of a multimedia content.

According to one embodiment, the obtaining at least one highlight area comprises at least one belonging to the group comprising:

- comparing a luminance of at least one pixel in the current image with a predetermined threshold, the at least one highlight pixel being a pixel with a luminance above the threshold; and
- emphasizing highest luminance values of pixels in the current image with respect to lowest luminance values of pixels in the current image for providing the at least one highlight area comprising the at least one highlight pixel with a luminance among the highest luminance values being emphasized.

Thus, highlight areas are defined in a simple and robust way, whether by testing the luminance of pixels in the current image for deriving a map of highlight pixels in the image, whether by filtering the image.

According to one embodiment, the determining at least one glare area comprises filtering the at least one highlight area with a glare filter, providing at least one intermediate glare area associated with the at least one highlight area, a size of the at least one intermediate glare area being greater than a size of the at least one highlight area.

Thus, a glare area is determined for each highlight area present in the current image using a well-known method based on filtering. Furthermore, the convolution associated to the filtering induces a size of the determined glare area that is greater than the corresponding highlight area so as to extend from it after incorporation in the current image. Consequently, the glare takes place around the lightest parts of the current image so as to induce a perception of brightness for a person looking at the image.

According to one embodiment, the determining at least one glare area further comprises reshaping the at least one intermediate glare area, providing at least one surrounding glare area, an intersection between the at least one surrounding glare area and the at least one highlight area corresponding to pixels different from highlight pixels in the current image.

Thus, the part of the intermediate glare area that may overlap with the highlight area is canceled so that glare is added only where the input current image is dark or mid-tone. Consequently, the glare takes place only around the lightest parts of the current image so as to induce an improved perception of brightness for a person looking at the image.

According to one embodiment, the determining at least one glare area further comprises enlarging the at least one surrounding glare area by applying the glare filter to the at least one surrounding glare area, providing at least one enlarged glare area.

Thus, an enlarged glare area and the corresponding highlight area may slightly overlap (i.e. an intersection between the two areas may comprise at least one highlight pixel) so that a good matching is obtained. Consequently, the creation of false edges is canceled when superposing the enlarged glare area with the corresponding highlight area during its incorporation into the current image.

According to one embodiment, the enhancing brightness of the current image further comprises weighting the at least one glare area with a weight function, the weight function being based at least on a density of highlight pixels in the current image.

Thus, the amount of glare to be added can be controlled as a function of the overall luminance of the current image. The obtained output image can thus be consistent and easily tunable.

According to one embodiment, the glare filter is a separable 2D filter.

Thus, an efficient implementation of the glare filter is obtained in term of both processing time and implementation cost.

According to one embodiment, the method further comprises, or the apparatus is further configured for, reducing a contrast of at least one area of the current image, the reducing being based on at least the at least one glare area, providing a remapped lightness image, the enhancing brightness of the current image comprising incorporating the at least one glare area into the remapped lightness image.

Thus, the contrast is corrected in areas surrounding the ones where the glare area is incorporated so as to improve the perception of brightness.

According to one embodiment, the reducing a contrast of at least one area of the current image comprises:

- filtering the at least one glare area, providing an attenuation map representative of the at least one area of the current image; and
- remapping a luminance of the current image based on the attenuation map, providing the remapped lightness image.

According to one embodiment, the method further comprises, or the apparatus is further configured for, modifying a chrominance of at least one area of the output image as a function of at least the at least one glare area.

Thus, the Hunt effect (i.e. the modification of the perception of colors as a function of the luminance) is corrected.

According to one embodiment, the modifying a chrominance of at least one area of the output image comprises:

- obtaining a chrominance correction map being a function of at least the at least one glare area, of at least a luminance of the current image, and of at least a chrominance of the current image; and
- correcting the chrominance of the output image based on the chrominance correction map.

According to one embodiment, the multimedia content comprises a video content, and the at least one highlight area further comprises at least another pixel belonging to another highlight area obtained for a previous image in the video content.

According to another embodiment, the multimedia content comprises a video content, and the predetermined threshold is a function of at least another predetermined threshold used for comparing a luminance of at least one pixel in a previous image in the video content.

According to yet another embodiment, the multimedia content comprises a video content, and a value of a parameter used for parameterizing the glare filter is a function of at least another value of the parameter used for parameterizing the glare filter used for filtering at least one highlight area in a previous image in the video content.

Thus, the disclosed method is temporally stable so that no flicker or other unwanted artefacts are introduced in the video content.

Furthermore, when a sharp transition occurs in the content, or during the time immediately following such a sharp transition (where for instance a transition may be due to switching between a movie and a commercial and back), the method according to this embodiment allows a smooth adaptation of the content so as to follow the speed of human visual adaptation for instance.

Another aspect of the present disclosure relates to a computer program product comprising program code instructions for implementing the above-mentioned method for enhancing brightness of a multimedia content (in any of its different embodiments), when the program is executed on a computer or a processor.

Another aspect of the present disclosure relates to a non-transitory computer-readable carrier medium storing a computer program product which, when executed by a computer or a processor causes the computer or the processor to carry out the above-mentioned method for enhancing brightness of a multimedia content (in any of its different embodiments).

## 4. LIST OF FIGURES

Other features and advantages of embodiments shall appear from the following description, given by way of indicative and non-exhaustive examples and from the appended drawings, of which:

- Figure 1 illustrates the relationship between the presence of glare around a white area and the resulting perceived brightness of the area;
- Figures 2a and 2b are flowcharts of particular embodiments of the disclosed method for enhancing brightness of a multimedia content according to different embodiments of the present disclosure;
- Figures 3a to 3m illustrate filtering operations constitutive of the disclosed method for enhancing brightness of a multimedia content and the corresponding intermediate results according to the different embodiments disclosed in relation with figures 2a and 2b;
- Figure 4 is a schematic illustration of the structural blocks of an exemplary apparatus that can be used for implementing the method for enhancing brightness of a multimedia content according to the different embodiments disclosed in relation with figures 2a and 2b.
Figure 5 is a block diagram of one embodiment of an apparatus for performing the method according to the general aspects described.

## 5. DETAILED DESCRIPTION

In all of the figures of the present document, the same numerical reference signs designate similar elements and steps.

The general principle of the disclosed method consists of obtaining a highlight area representative of an area comprising at least one highlight pixel of an image of a multimedia content (including image or video materials), in determining a glare area from the highlight area, and in enhancing brightness of the image by incorporating the glare area into the current image for providing an output image.

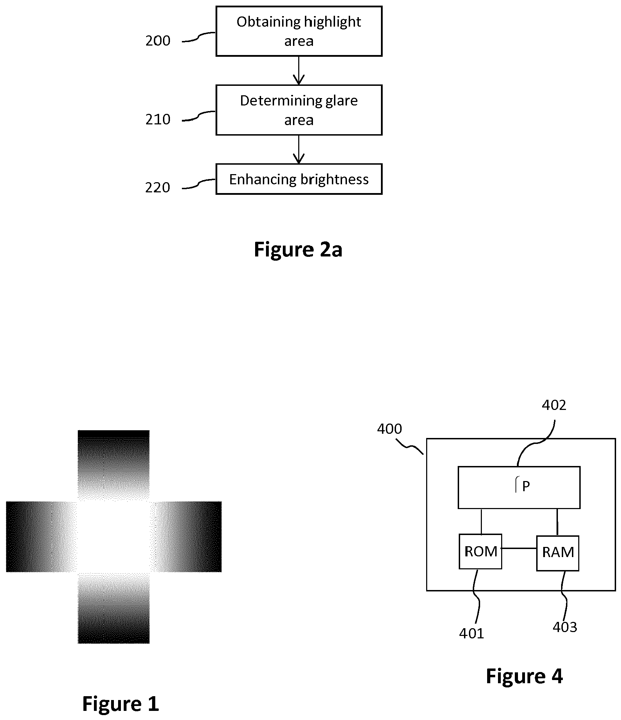

Referring now to **figure 1,** we illustrate the relationship between the presence of glare around a white area and the resulting perceived brightness of that area.

Indeed, when observing an image on an HDR display, an amount of veiling glare is created in the visual system of the person viewing the image that is much less noticeable at lower luminance levels. This veiling glare is part of the sensation of brightness experienced by the person viewing the image.

Thus, the introduction of veiling glare in light areas of an image at low luminance dynamic range would enhance the appearance of brightness, without increasing the dynamic range (i.e. the bit depth) of the image.

This is confirmed by the illustration in figure 1, where the center of the figure appears brighter than the white area outside due to the added glare around it.

However, this figure also illustrates that the introduction of such glare in the picture results in a degradation of the contrast in the image. Consequently, the disclosed method proposes to introduce such glare selectively in lighter areas of the image only.

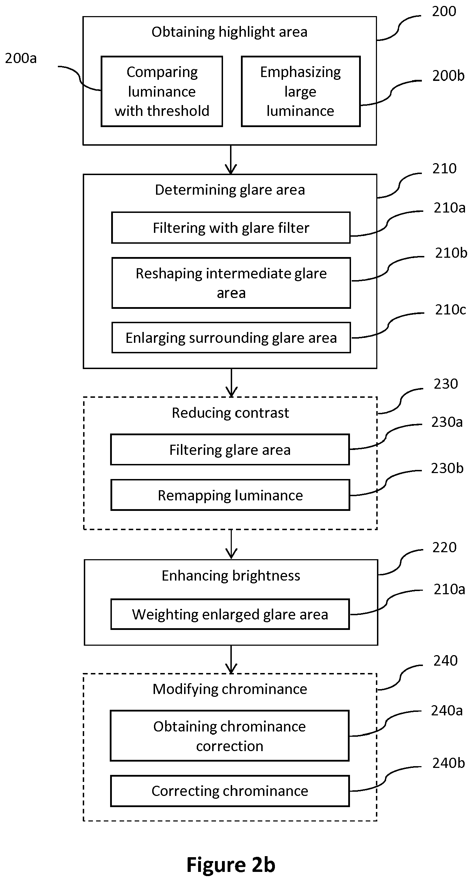

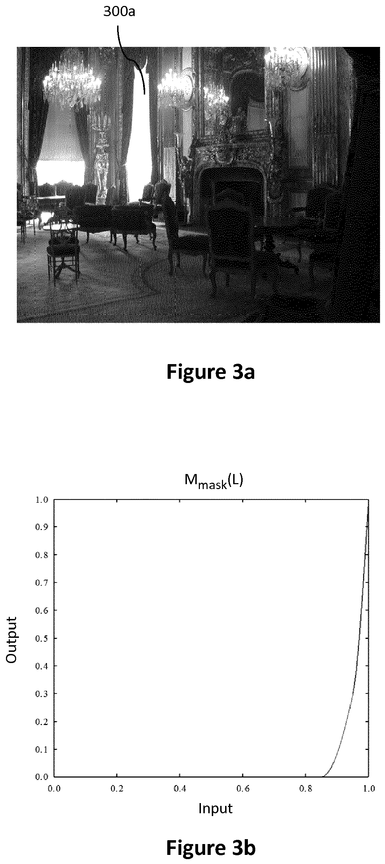

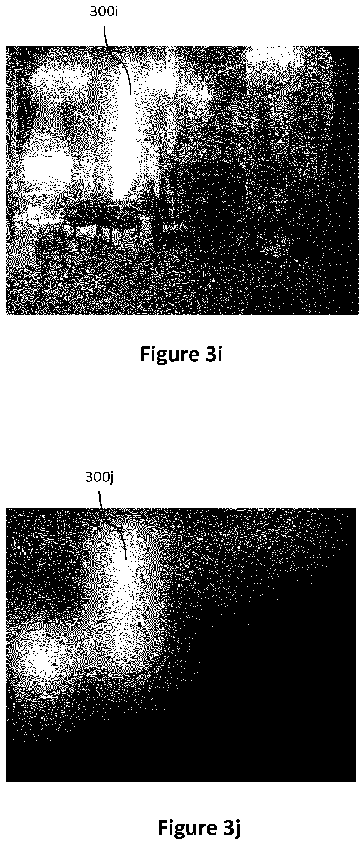

Referring now to **figures 2a and 2b,** as well as to **figures 3a to 3m,** we illustrate a method for enhancing brightness of a multimedia content according to different embodiments of the present disclosure as well as the associated intermediate results of the method.

For that, the disclosed method is applied to a current image (corresponding to figure 3a) of the multimedia content (i.e. that includes image or video materials).

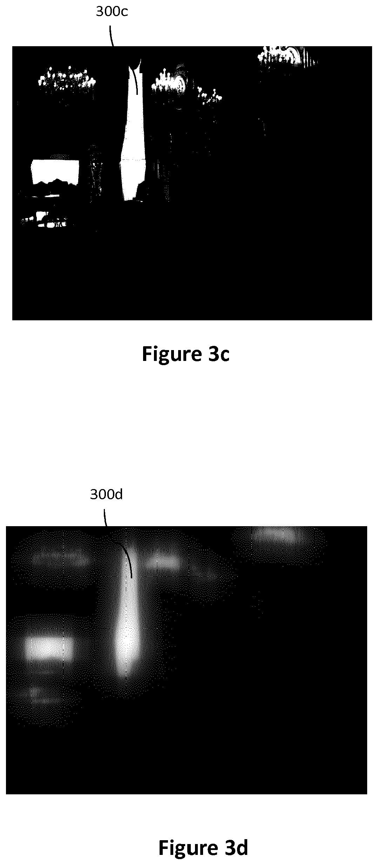

In block 200 (figures 2a and 2b), at least one highlight area 300c (figure 3c) representative of at least an area 300a (figure 3a) of the current image comprising at least one highlight pixel is obtained. In other words, at least one highlight area 300c representative of at least one lighter area in the current image is obtained.

In the following, a highlight area 300c is considered, representative of the area 300a in the current image, but it is to be noted that many distinct highlight areas 300c can be obtained, representative of many distinct areas 300a in the current image. This can also be applied to intermediate glare areas, surrounding glare areas, enlarged glare areas, brighter areas as described below.

In a first embodiment, highlight pixels in the current image are obtained in block 200a (figure 2b) as pixels presenting a luminance above a given threshold.

For that, the image is encoded in the sRGB color space. In variants, other non-linear color spaces or even linear color spaces are used.

A global threshold T is determined as a function of the arithmetic mean luminance $L_{mean}$ of the current image, and as a function of the minimum $L_{min}$ and maximum $L_{max}$ luminance of the current image. In a variant, the minimum luminance $L_{min}$ is set to zero and the maximum luminance $L_{max}$ is set to $2^{bitdepth}$ (where bitdepth is a count of the number of bits in the image representation, e.g. eight in a classical non HDR standard), without analyzing the image.

Using these three values, the global threshold T is computed as follows:

$$T = k \frac{L_{mean} - L_{min}}{L_{max} - L_{min}}$$

with $k$ an appropriately chosen constant that allows fine tuning the global threshold $T$. Highlight pixels are then defined as being pixels with a luminance above the global threshold $T$, and highlight area(s) 300c as being the area(s) comprising the highlight pixels defined that way.

In a variant, this is not a global threshold that is used for comparing the luminance of the pixels in the current image and thus determining highlight pixels, but rather a per pixel threshold. In other words, an individual threshold $T_i$ is associated to the i-th pixel $p_t$ in the current image. The i-th pixel $p_t$ is then decided to be a highlight pixel if its luminance is above the individual threshold $T_i$.

In another variant, a mask representative of highlight pixels in the current image is obtained. More particularly, elements of the mask are set to "1" for all pixels $p_i$ that have a luminance value $L_i$ which is above the corresponding individual threshold $T_i$. The elements of the mask are set to zero for all other pixels. This mask is further analyzed to find connected regions $s_j \in S$ of highlight pixels (where $s_j$ is one connected region in the set $S$ of all connected regions belonging to the current image). In this context, a connected region is a collection of pixels that are adjacent to one another.

For each region $s_j$, it's size $m(s_j)$ is calculated. If a region's size is smaller than a predetermined threshold M, then this region is selected as a highlight area 300c that will be further processed for adding glare.

Indeed, there is value in adding more glare to small highlight area(s) 300c than to larger highlight area(s) 300c. This indeed contaminates the image less with contrast-reducing glare, while at the same time improving the impression of brightness for small features or highlights.

In a second embodiment, a highlight area 300c representative of an area 300a of the current image comprising at least one highlight pixel is directly obtained in block 200b (figure 2b) by emphasizing highest luminance values of pixels in the current image in respect of lowest luminance values of pixels in the current image. In this second embodiment, highlight pixels in the current image are defined as being pixels with a luminance among the ones that have been emphasized in respect of lowest luminance values in block 200b.

For that, the image is encoded into the CIELAB color space, using D65 white point. In variants, other non-linear color spaces or even linear color spaces are used.

Optionally, the luminance representation $L$ of the current image may be downsampled to $L_{down}$. This increases the speed of processing. However, the accuracy of processing may reduce somewhat. Downsampling factors of up to sixteen in each dimension lead to acceptable visual quality. For convenience of notation, in the following, $L_{down}$ will be used everywhere a downsampled image can be used, even if the image was not downsampled (in this case, the downsampling factor can be taken to be one).

The maximum luminance $L_{max}$ in the current image is first computed as $L_{max} = max(L_{down})$.

The luminance $L_{down}$ of the current image is then reshaped so as to emphasize highest luminance values of pixels in the current image in respect of lowest luminance values, providing the mask of reshaped luminance $L_{mask}$ defined as:

$$L_{mask} = s_{pre} \, L_{max} \, M_{mask}(L_{down}/L_{max})$$

with $s_{pre}$ a user parameter controlling the strength of the emphasizing processing (e.g. set to a value of two), and where $M_{mask}(L)$ is a function exhibiting such emphasizing characteristic. For instance, a non-vanishing luminance value in the mask of reshaped luminance is associated only to input luminance above a given value as is the case for the exemplary $M_{mask}(L)$ function illustrated in figure 3b, that corresponds to the interpolation of the particular defining points {(0, 0), (0.5, 0), (0.8, 0), (0.85, 0), (0.95, 0.3), (1, 1)}.

Pixels in the mask of reshaped luminance $L_{mask}$ with a luminance that has been emphasized in respect of lowest luminance values then define the highlight area 300c where glare has to be added.

In block 210 (figures 2a and 2b), at least one glare area is determined from the at least one highlight area 300c.

For that, the at least one highlight area obtained in block 200 is filtered in block 210a (figure 2b) with a glare filter for providing at least one intermediate glare area 300d (figure 3d) associated to the corresponding highlight area.

To this end the luminance $L_i$ of the i-th highlight pixel in the current image is derived using standard techniques. For instance, if the current image is specified in the sRGB color space, then $L_i$ is given by:

$$L_i = 0.2126 \, R_i + 0.7152 \, G_i + 0.0722 \, B_i$$

Conversely, the Kernel of the glare filter is expressed as:

$$K(x) = \frac{1}{D^2 \, \theta_x \, (\theta_x + 1.5)}$$

In this equation, $D$ is the viewing distance and $\theta_x$ is the visual angle subtended by a single pixel which is x elements away from the center. The number of elements in the kernel is typically chosen to be five or more. Twenty elements are often used. In this embodiment, the filter is circularly symmetric, and is therefore expressed in one dimension only. However, a 2D convolution kernel can be built from this description, which can eventually be applied to the image. If the 1 D kernel has $n$ elements, then the 2D kernel has $(2n + 1)^2$ elements. The center element of this 2D kernel is always set to zero. The kernel is also normalized, so that the sum of its elements is unitary. This makes the filter kernel energy preserving.

If the horizontal screen resolution is given by r and the width of the screen is given by w, then the visual angle $\theta_x$ is given by:

$$\theta_x = \tan^{-1} \frac{\pi}{180} \frac{r}{w} \frac{x}{D}$$

As an example, for a display with a 47-inch diagonal, the recommended viewing distance is between 4.7 and 7.4 feet. Assuming a distance of 6 feet, the viewing distance parameter would be set to D = 72 inches. Let us also assume that the 47-inch display has a resolution of 1920 by 1080 pixels. The width of the display will be w = 41 inches if a 16:9 aspect ratio is assumed and the value for r is 1920.

The circularly symmetric convolution kernel $K(x, y)$ which is derived from the 1 D filter K(x) is then convolved three times with each of the color channels $R_{i,f}$, $G_{i,f}$ and $B_{i,f}$ of the highlight pixel in the current image:

$$R_{i,f}^{K} = R_{i,f} \otimes K$$

$$G_{i,f}^{K} = G_{i,f} \otimes K$$

$$B_{i,f}^{K} = B_{i,f} \otimes K$$

thus providing the luminance $L_{filt}$ of the at least one intermediate glare area 300d.

In embodiments where the image is downsampled, then the size of the filter kernel needs to be reduced in each dimension by the same downsampling factor.

In other embodiments, other kind of glare filters as proposed in the literature can be used.

In some embodiments, the filter kernel $K$ is a separable 2D filter so that an efficient implementation of the glare filter is obtained in term of both processing time and implementation cost. In other embodiments, the filter kernel $K$ is forced to be separable using singular value decomposition (SVD). Forcing separability in this manner makes the convolution much faster, but only approximates the desired filter. However, the loss of visual quality is minimal.

Due to the convolution associated to the filtering processing, the size of the intermediate glare area 300d is greater than the highlight area 300a it is originated from. Consequently, such intermediate glare area 300d can be incorporated as such in the current image, thus resulting in glare that takes place around the corresponding highlight area 300a. This therefore induces a perception of brightness for a person looking at the current image.

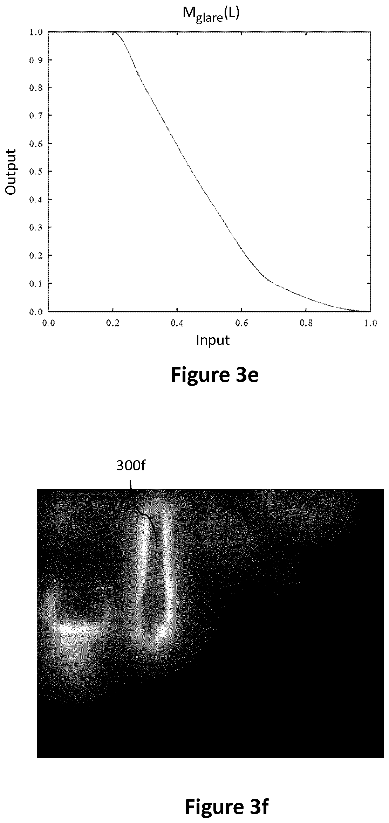

In an embodiment, the intermediate glare area 300d is reshaped in block 210b (figure 2b) so as to provide a surrounding glare area 300f (figure 3f).

Indeed, it appears that the central part of the intermediate glare area 300d obtained in block 210a overlaps with the corresponding highlight area 300a. The perception of brightness can be improved for a person looking at the current image by adding glare only around the highlight area 300a.

For that, the luminance $L_{filt}$ of an intermediate glare area 300d is reshaped using a reshaping function $M_{glare}$, providing a luminance $L_{glare}$ of a surrounding glare area 300f as:

$$L_{glare} = L_{filtered} \, M_{glare}(L_{down}/L_{max})$$

For instance, low input luminance values may be kept unchanged whereas high input luminance values may be attenuated as is the case when using the exemplary $M_{glare}(L)$ function illustrated in figure 3e that corresponds to the interpolation of the particular defining points {(0, 1), (0.2, 1), (0.3, 0.8), (0.5, 0.4), (0.7, 0.1), (1, 0)}.

Consequently, such surrounding glare area 300f can be incorporated as such in the current image, thus resulting in glare that takes place only around the corresponding highlight area 300a. This therefore induces an improved perception of brightness for a person looking at the current image.

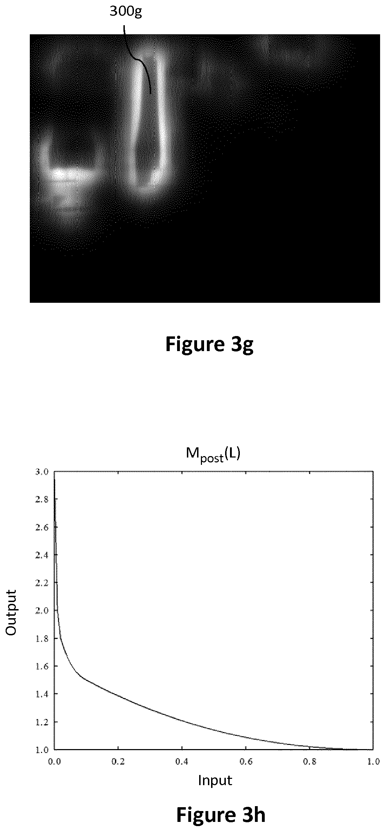

In an embodiment, the surrounding glare area 300f is enlarged in block 210c (figure 2b) so as to provide an enlarged glare area 300g (figure 3g).

Such enlarged glare area 300g has a similar shape compared to the surrounding glare area 300f, but the surrounding area exhibits a larger width than the one in the surrounding glare area 300f.

For that, the glare filter as discussed above in relation with block 210a is applied again to the surrounding glare area 300f so that the convolution processing induces this enlargement of high luminance values.

In other embodiments, the filter applied in block 210c is different than the glare filter used in block 210a.

As a result, the enlarged glare area 300g and the corresponding highlight area 300a may slightly overlap (i.e. an intersection between the two areas may comprise at least one highlight pixel as defined above in relation with blocks 200a and 200b) so that a good matching is obtained. Consequently, the creation of false edges is canceled when superposing the enlarged glare area 300g with the corresponding highlight area 300a during its incorporation into the current image. This therefore induces an improved perception of brightness for a person looking at the current image.

In block 220 (figures 2a and 2b), the brightness of the current image is enhanced by incorporating the intermediate glare area 300d, or the surrounding glare area 300f, or the enlarged glare area 300g determined from at least the highlight area 300c in block 210, providing an output image comprising at least a brighter area 300i.

Indeed, following the various embodiments disclosed above in relation with the blocks 210a, 210b and 210c, the glare area may take the form of whether the intermediate glare area 300d, of whether the surrounding glare area 300f, or of whether the enlarged glare area 300g.

Accordingly, the incorporation of the glare area(s) in the current image may take the form of the addition of the luminance $L_{filt}$ of the intermediate glare area(s) 300d, or of the luminance $L_{glare}$ of the surrounding glare area(s) 300f, or of the luminance of the enlarged glare area(s) 300g to a luminance representation of the current image (e.g. in the sRGB or in the CEILAB color space).

As a result, the brightness of the current image is enhanced without increasing the dynamic range or bit-depth of the image.

Furthermore, having added glare selectively only in areas where glare has to be seen by the person looking at the image (i.e. the lighter areas), areas not affected by glare do not loose contrast, yielding in having the overall contrast of the current image not degraded.

In one particular embodiment, the glare area 300d (or 300f, or 300g) is further weighted by a weight function $w_{post}$ that takes into account at least a density of highlight pixels in the current image in block 210d (figure 2b) before incorporation into the current image.

For instance, the weight function $w_{post}$ may take the form:

$$w_{post} = s_{post} \, M_{post}(r)$$

where $s_{post}$ is a user parameter that allows a fine tuning of the weight function $w_{post}$, and where:

$$r = \frac{|L_{down} > 0.9 \, L_{max}|}{|L_{down}|}$$

is the number of pixels larger than 90% of the maximum luminance in the current image, divided by the total number of pixels in the image (with or without downsampling as discussed above in relation with block 200b). In this equation $|.|$ stands for "the cardinal of".

In the same way, $M_{post}$ is a function allowing to adapt the amount of glare added to the current image to its overall luminance as is the case for instance when using the exemplary $M_{post}(L)$ function illustrated in figure 3h that corresponds to the interpolation of the particular defining points $\{(0, 3), (0.005, 2.5), (0.01, 2), (0.02, 1.8), (0.1, 1.5), (1, 1)\}$.

Thus, the amount of glare to be added can be controlled as a function of the overall luminance of the current image. The obtained output image can thus be consistent and easily tunable.

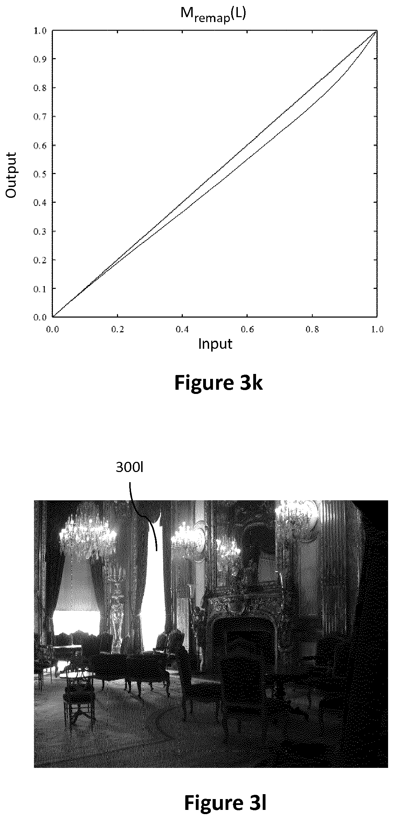

In block 230 (figures 2a and 2b), the contrast of areas 300l (figure 3l) that are related to the glare areas 300d (or 300f, or 300g) is reduced, thus providing a remapped lightness image.

In that case, the output image obtained in block 220 results of the incorporation of the glare area(s) 300d (or 300f, or 300g) in the remapped lightness image rather than directly in the current image.

For that, in a block 230a (figure 2b), glare area(s) 300d (or 300f, or 300g) is/are filtered so as to provide an attenuation map 300j (figure 3j), with a luminance representation $L_{att}$ (e.g. in the sRGB or in the CEILAB color space), representative of the areas in the current image in which the contrast has to be reduced. Denoting G the impulse response of a Gaussian filter in the luminance space, it means that:

$$L_{att} = G * \left( \frac{L_{glare}}{\max(L_{glare})} \right)$$

In one embodiment, the filter used to filter the glare area(s) 300d (or 300f, or 300g) is a 2D Gaussian filter. Such filter has the great advantage to be always separable so that an efficient implementation can be made.

The luminance $L_{down}$ of the current image is thus remapped based on the attenuation map 300j so as to provide the remapped lightness image with a luminance representation $L_{remap}$.

For instance, a luminance representation $L_{remap}$ of the remapped lightness image is obtained as:

$$L_{remap} = M_{remap} \left( \left( \frac{L}{\max(L)} \right), \left( \frac{L_{att,up}}{\max(L_{att,up})} \right) \right)$$

where $L_{att,up}$ is $L_{att}$ upsampled to the size of the current image, i.e. to the size of the luminance representation L of the current image (as discussed above in relation with block 200b, in case a downampling factor equal to one was used for obtaining $L_{down}$, i.e. no downsampling was performed, $L_{att,up}$ directly corresponds to $L_{att}$), and where $M_{remap}(L,A)$ is a function of both an input luminance L, and of a remapping map *A*.

More particularly, the remapping is first applied to *L*, based for instance on the exemplary function illustrated in figure 3k that corresponds to the interpolation of the particular defining points {(0,0), (0.02, 0.02), (0.1, 0.1), (0.6, 0.55), (0.9, 0.85), (1, 1)}, providing a modified luminance L'. Then, a reweighting operation is applied so as to provide $L_{remap}$ as:

$$L_{remap} = L'.A + L.(1 - A)$$

where the operator indicates element-wise multiplication.

As a result, the contrast is corrected in area(s) 300l surrounding the ones where the glare area(s) 300d (or 300f, or 300g) is/are incorporated so as to improve the overall perception of brightness.

In block 240 (figures 2a and 2b), the chrominance of areas in the output image is modified as a function of at least the glare area(s) 300d (or 300f, or 300g).

Indeed, as lightness and chrominance are correlated in human vision according to the Hunt effect, chrominance may be adjusted after the incorporation of the glare area(s) 300d (or 300f, or 300g) so as to improve the overall perception of the output image.

For that, in block 240a (figure 2b), a chrominance correction map *f* is obtained as a function of at least the glare area(s) 300d (or 300f, or 300g), of at least a luminance representation of the current image, and of at least a chrominance of the current image.

In one exemplary embodiment, *f* is obtained as:

$$f = \min\left(max\left(L_{glare}\right), max(C)\right) M_{chroma}\left(\frac{L_{glare,up}}{\max\left(L_{glare,up}\right)}, \frac{C}{\max(C)}, \frac{L}{\max(L)}\right)$$

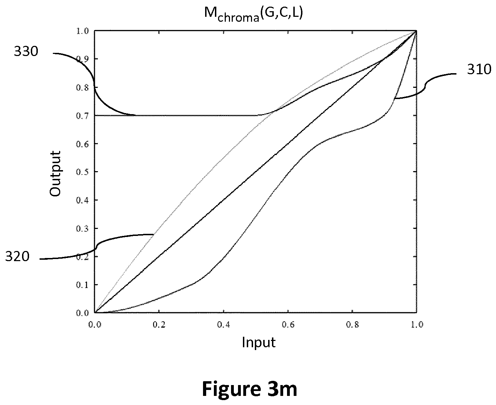

where $\min(max(L_{glare}), max(C))$ is a normalization constant, and where $M_{chroma}(G,C,L)$ is a separable function that takes the form of the product $M_{chroma,G}(G).M_{chroma,C}(C).M_{chroma,L}(L)$. In the exemplary embodiment illustrated in figure 3m, the function:

- $M_{chroma,G}(G)$ corresponds to the interpolation of the particular defining points {(0, 0), (0.3, 0.1), (0.7, 0.6), (0.9, 0.7), (1, 1)} (curve 310);
- $M_{chroma,C}(C)$ corresponds to the interpolation of the particular defining points {(0, 0), (0.4, 0.55), (0.6, 0.75), (0.9, 0.95), (1, 1)} (curve 320); and
- $M_{chroma,L}(L)$ corresponds to the interpolation of the particular defining points {(0,0.7), (0.3, 0.7), (0.5, 0.7), (0.7, 0.8), (0.9 0.9), (1, 1)} (curve 330).

In a block 240b (figure 2b), the chrominance of the output image is corrected based on the chrominance correction map *f*.

More particularly, the chrominance correction map *f* is subtracted from the chrominance representation C of the output image, providing a corrected chrominance representation $C_{out} = C - f$.

In case the processing is performed in the CIELAB color space, the chrominance representation C can be computed from the *a* and b channels using $C = \sqrt{a^2 + b^2}$.

Consequently, the Hunt effect (i.e. the modification of the perception of colors as a function of the luminance) is corrected.

In some embodiments, the multimedia content includes a video content, and the highlight area(s) 300c obtained for a current image of the video content further comprises at least another pixel belonging to another highlight area obtained for a previous image in the video content.

For instance, reconsidering the first embodiment disclosed above in relation with block 200a, and denoting $s_j^t$ the connected regions belonging to the current image (i.e. the one that takes place at time *t)*, this could be achieved by expanding a region $s_j^t$ such that it also includes all the pixels of $s_j^{t-1}$, i.e.:

$$s_j^t = \{p_{i,j}^t\} \cup \{p_{i,j}^{t-1}\}$$

Thus, the shape and position of each region change in a coherent and predictable manner so that the disclosed method is temporally stable and no flicker or other unwanted artefacts are introduced in the video content.

Furthermore, when a sharp transition occurs in the content, or during the time immediately following such a sharp transition (where for instance a transition may be due to switching between a movie and a commercial and back), the method according to this embodiment allows a smooth adaptation of the content so as to follow the speed of human visual adaptation for instance.

In other embodiments, the global (or individual) threshold discussed above still in relation with the first embodiment disclosed in relation with block 200a, and used for a current image, can be made function of at least another global (or individual) threshold used for comparing a luminance of at least one pixel in a previous image in the video content.

For instance, a leaky integration can be considered on the thresholds so that the global threshold $T^t$ used for the current image can be further averaged so as to provide an averaged global threshold $T_{av}^t = \alpha T^t + (1 - \alpha)T^{t-1}$, with $\alpha$ the parameter used for leaky integration (and with superscript t still referring to the current image). The same could be done for individual pixels.

In yet other embodiments, a value of a parameter used for parameterizing the glare filter discussed above in relation with block 210a is a function of at least another value of the same parameter used for parameterizing the glare filter when used for filtering the highlight areas 300c in a previous image in the video content. It may be for instance the viewing distance $D$, or the visual angle $\theta_x$ subtended by a single pixel that is $x$ elements away from the center.

Referring now to **figure 4,** we illustrate the structural blocks of an exemplary apparatus that can be used for implementing the method for enhancing brightness of a multimedia content according to any of the embodiments disclosed above in relation with figures 2a and 2b.

In an embodiment, an apparatus 400 for implementing the disclosed method comprises a non-volatile memory 401 (e.g. a read-only memory (ROM) or a hard disk), a volatile memory 403 (e.g. a random access memory or RAM) and a processor 402. The non-volatile memory 401 is a non-transitory computer-readable carrier medium. It stores executable program code instructions, which are executed by the processor 402 in order to enable implementation of the method described above (method for enhancing brightness of a multimedia content) in its various embodiment disclosed in relationship with figures 2a and 2b.

Upon initialization, the aforementioned program code instructions are transferred from the non-volatile memory 401 to the volatile memory 403 so as to be executed by the processor 402. The volatile memory 403 likewise includes registers for storing the variables and parameters required for this execution.

All the steps of the above method for enhancing brightness of a multimedia content may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

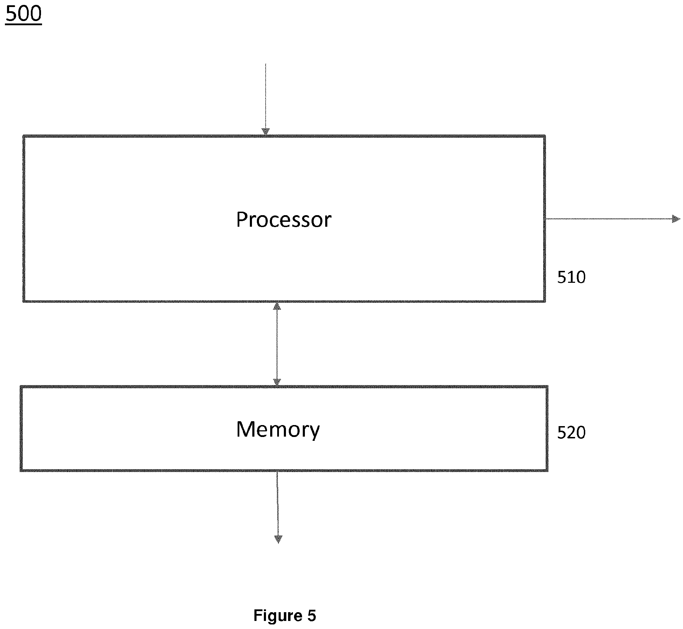

Figure 5 shows one embodiment of an apparatus 500 for enhancing brightness of a multimedia content according to the general aspects described. The apparatus is comprised of Processor 510 interconnected to Memory 520. Instructions in Memory 520 cause Processor 510 to execute instructions to implement the method of either Figure 2a or Figure 2b on multimedia content, which may be input on one of the input ports of Processor 510 or stored in Memory 520.

## Claims

1. A method for enhancing brightness of a multimedia content, comprising, for a current image of said multimedia content:

   obtaining (200) at least one highlight area (300c) representative of at least one area of said current image comprising at least one highlight pixel;
determining (210) at least one glare area (300d, 300f, 300g) from at least said at least one highlight area; and
enhancing (220) a brightness of said current image by incorporating said at least one glare area into said current image to provide an output image,.

2. An apparatus for enhancing a brightness of a multimedia content comprising:

a memory, and
a processor (402) configured for, for a current image of said multimedia content:

obtaining at least one highlight area (300c) representative of at least one area of said current image comprising at least one highlight pixel;
determining at least one glare area (300d, 300f, 300g) from at least said at least one highlight area; and
enhancing a brightness of said current image by incorporating said at least one glare area into said current image.

3. A method according to claim 1, or an apparatus according to claim 2,
wherein obtaining (200) at least one highlight area comprises a at least one belonging to the group comprising:

comparing (200a) a luminance of at least one pixel in said current image with a predetermined threshold, said at least one highlight pixel being a pixel with a luminance above said threshold; and
emphasizing (200b) highest luminance values of pixels in said current image with respect to lowest luminance values of pixels in said current image for providing said at least one highlight area comprising said at least one highlight pixel with a luminance among said highest luminance values being emphasized.

4. A method according to claim 1 or 3, or an apparatus according to claim 2 or 3 wherein determining (210) at least one glare area comprises filtering (210a) said at least one highlight area with a glare filter, to provide at least one intermediate glare area (300d) associated with said at least one highlight area,
a size of said at least one intermediate glare area being greater than a size of said at least one highlight area.

5. A method according to claim 1 or 3-4, or an apparatus according to any one of claims 2 to 4,
wherein said determining (210) at least one glare area further comprises reshaping (210b) said at least one intermediate glare area, providing at least one surrounding glare area (300f),
an intersection between said at least one surrounding glare area and said at least one highlight area corresponding to pixels different from highlight pixels in said current image.

6. A method according to any one of claims 1 or 3-5, or an apparatus according to any one of claims 2 to 5,
wherein said determining (210) at least one glare area further comprises enlarging (210c) said at least one surrounding glare area by applying said glare filter to said at least one surrounding glare area, delivering at least one enlarged glare area (300g).

7. A method according to 6, or an apparatus according to claim 6,
wherein said enhancing (220) a brightness of said current image further comprises weighting (220a) said at least one glare area with a weight function, said weight function being based at least on a density of highlight pixels in said current image.

8. A method according to any one of claims 1 or 3-7 further comprising, or an apparatus according to any one of claims 2 to 7 further configured for,
reducing (230) a contrast of at least one area of said current image, said reducing being based on at least said at least one glare area,
providing a remapped lightness image, said enhancing (220) brightness of said current image comprises incorporating said at least one glare area into said remapped lightness image.

9. A method according to 8, or an apparatus according to claim 8,
wherein reducing (230) a contrast of at least one area of said current image comprises:

filtering (230a) said at least one glare area, providing an attenuation map representative of said at least one area of said current image; and

remapping (230b) a luminance of said current image based on said attenuation map, providing remapped lightness image.

10. A method according to any one of claims 1 or 3-9 further comprising, or an apparatus according to any one of claims 2 to 9 further configured for,
modifying (240) a chrominance at least one area of said enhanced image as a function of at least said at least one glare area.

11. A method according to 10, or an apparatus according to claim 10,
wherein said modifying (240) a chrominance of at least one area of said enhanced image comprises:

obtaining (240a) a chrominance correction map being a function of at least said at least one glare area, of at least a luminance of said current image, and of at least a chrominance of said current image; and
correcting (240b) said chrominance of said enhanced image based on said chrominance correction map.

12. A method according to any one of claims 1 or 3-11, or an apparatus according to any one of claims 2 to 11,
wherein said multimedia content comprises video content,
and wherein said at least one highlight area further comprises at least another pixel belonging to another highlight area obtained for a previous image in said video content.

13. Computer program product comprising program code instructions for implementing the method according to any one of claims 1 or 3 to 12, when said program is executed on a computer or a processor.

14. A non-transitory computer-readable storage medium storing a computer program product according to claim 13.

Figure 2a

Figure 1

Figure 4

**Figure 2b**

Figure 3a

Figure 3b

300c

**Figure 3c**

300d

**Figure 3d**

$M_{glare}(L)$

Figure 3e

Figure 3f

300g

**Figure 3g**

$M_{post}(L)$

**Figure 3h**

**Figure 3i**

**Figure 3j**

Figure 3k

Figure 3l

Figure 3m

500

Processor

510

Memory

520

Figure 5

**EUROPEAN SEARCH REPORT**

Application Number

EP 16 30 6410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AKIKO YOSHIDA ET AL: "Brightness of the glare illusion", PROCEEDINGS OF THE 5TH SYMPOSIUM ON APPLIED PERCEPTION IN GRAPHICS AND VISUALIZATION, APGV '08, 9 August 2008 (2008-08-09), pages 83-90, XP055348888, New York, New York, USA DOI: 10.1145/1394281.1394297 ISBN: 978-1-59593-981-4 * section 3; figure 3 * | 1-14 | INV. G06T5/00 |
| X | US 2009/034868 A1 (REMPEL ALLAN G [CA] ET AL) 5 February 2009 (2009-02-05) * paragraphs [0029], [0038] - [0047]; figures 1,2,3B * | 1-14 | |
| X | Masaki Kawase: "Practical Implementation of High Dynamic Range Rendering", Game Developers Conference, 24 March 2004 (2004-03-24), XP055349128, Retrieved from the Internet: URL:www.daionet.gr.jp/~masa/archives/GDC2004/GDC2004_PIoHDRR_SHORT_EN.ppt [retrieved on 2017-02-23] * pages 1, 2, 14-17 * | 1-14 | TECHNICAL FIELDS SEARCHED (IPC)<br><br>G06T |
| A | T. RITSCHEL ET AL: "Temporal Glare: Real-Time Dynamic Simulation of the Scattering in the Human Eye", COMPUTER GRAPHICS FORUM, vol. 28, no. 2, 1 April 2009 (2009-04-01), pages 183-192, XP055017598, ISSN: 0167-7055, DOI: 10.1111/j.1467-8659.2009.01357.x * abstract; figures 8,11 * * sections 2 and 5 * | 8-11 | |

-/--

The present search report has been drawn up for all claims

| Place of search | Date of completion of the search | Examiner |
|---|---|---|
| Munich | 24 February 2017 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 16 30 6410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EIHACHIRO NAKAMAE ET AL: "A lighting model aiming at drive simulators", COMPUTER GRAPHICS, ACM, US, vol. 24, no. 4, 1 September 1990 (1990-09-01), pages 395-404, XP058098679, ISSN: 0097-8930, DOI: 10.1145/97880.97922 * sections 3.1-3.4; figures 8,9,16 * | 8-11 | |
| A | GREG SPENCER ET AL: "Physically-based glare effects for digital images", SIGGRAPH 95 CONFERENCE PROCEEDINGS : AUGUST 6 - 11, 1995, [LOS ANGELES, CALIFORNIA]; [COMPUTER GRAPHICS PROCEEDINGS (SIGGRAPH)], ACM, NEW YORK, NY, USA, 15 September 1995 (1995-09-15), pages 325-334, XP058296079, DOI: 10.1145/218380.218466 ISBN: 978-0-89791-701-8 * sections 3.1 and 3.2 * | 8-11 | TECHNICAL FIELDS SEARCHED (IPC) |
| A | Erik Reinhard ET AL: "8.4.2 GLARE ILLUSION" In: "High Dynamic Range Imaging", 28 May 2010 (2010-05-28), Elsevier Science, XP055348855, ISBN: 978-0-12-374914-7 pages 367-376, * the whole document * | 1-14 | |

The present search report has been drawn up for all claims

| Place of search | Date of completion of the search | Examiner |
|---|---|---|
| Munich | 24 February 2017 | Krawczyk, Grzegorz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 16 30 6410

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2017

| Patent document cited in search report | Publication date | Patent family member(s) | Publication date |
|---|---|---|---|
| US 2009034868 A1 | 05-02-2009 | US 2009034868 A1<br>US 2012237136 A1<br>US 2014064634 A1<br>US 2014168249 A1 | 05-02-2009<br>20-09-2012<br>06-03-2014<br>19-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WYSZECKI, G. ; STILES, W.S.** Color Science. John Wiley, 2000